# EUROPÄISCHE PATENTSCHRIFT

(11) **EP 4 259 389 B1**
(45) Veröffentlichungstag und Bekanntmachung des Hinweises auf die Patenterteilung: **18.02.2026**
(21) Anmeldenummer: 21830936.7
(22) Anmeldetag: 08.12.2021
(51) Int. Cl.: B25J 19/00

(54) **STOSSSCHUTZSICHERHEITSEINRICHTUNG FÜR ROBOTER**
IMPACTPROTECTION SAFETY DEVICE FOR A ROBOT
DISPOSITIF DE SECURITE ANTICHOC POUR ROBOT

(30) Priorität: 11.12.2020 DE 102020133102
(43) Veröffentlichungstag der Anmeldung: 18.10.2023
(73) Patentinhaber: Schaeffler Technologies AG & Co. KG, 91074 Herzogenaurach (DE)
(72) Erfinder: VOLK, Wolfgang, 96158 Frensdorf (DE)
(74) Vertreter: Schaeffler Technologies
(86) Internationale Anmeldenummer: PCT/DE2021/100982
(87) Internationale Veröffentlichungsnummer: WO 2022/122083

(56) Entgegenhaltungen:
- CN-B- 101 863 035
- DE-A1- 102017 217 882
- US-A1- 2004 128 850
- US-A1- 2020 254 628

## Beschreibung

Die Erfindung betrifft eine nach dem Oberbegriff des Anspruchs 1 ausgebildete Stoßschutz-Sicherheitseinrichtung für Roboter.

Eine gattungsgemäße Stoßschutz-Sicherheitseinrichtung ist beispielsweise aus der DE 36 05 505 A1 bekannt. Die bekannte Sicherheitseinrichtung weist einen zwischen einem Schwenkarm und einem Arbeitsarm eines Roboters anzuordnenden Puffer- oder Dämpfungsmechanismus auf. Wenn beim Betrieb des Roboters eine Stoßkraft auf den Arbeitsarm wirkt, so soll diese durch den Puffermechanismus absorbiert werden, wobei ein Fühlerschalter, der Teil der Sicherheitseinrichtung ist, ein Signal zum unverzüglichen Stopp des Betriebs des Roboters gibt.

Eine mit dem Schwenkarm des Roboters verbundene Platte der Stoßschutz-Sicherheitseinrichtung nach der DE 36 05 505 A1 wird als "ortsfeste Platte" bezeichnet. Gegenüber der sogenannten ortsfesten Platte ist eine bewegliche Platte, die am Arbeitsarm des Roboters befestigt ist und ebenfalls der Stoßschutz-Sicherheitseinrichtung zuzurechnen ist, begrenzt verlagerbar. An der beweglichen Platte ist ein konisches Führungsteil festgeschraubt, welches in ein Führungsloch, das sich in der ortsfesten Platte befindet, eingreift. In der ortsfesten Platte befinden sich weiterhin mehrere Durchgangsbohrungen, in denen jeweils ein Zapfen verschiebbar ist. Jeder dieser Zapfen ist an einem Kolben befestigt, welcher sich auf der der beweglichen Platte abgewandten Seite der ortsfesten Platte befindet. Jeder Kolben kontaktiert zugleich eine Vertiefung in der Oberfläche der beweglichen Platte. Wird die bewegliche Platte in Richtung zur ortsfesten Platte verlagert, so drücken die Zapfen, welche nicht starr an der beweglichen Platte befestigt sind und somit auch Relativverdrehungen zwischen den beiden Platten zulassen, den Kolben von der ortsfesten Platte weg. Dieser Bewegung des Kolbens wirken Druckfedern entgegen, welche den Kolben direkt belasten. Zusätzlich ist der Kolben in der Wirkrichtung der Federn durch Druckluft belastbar.

Die DE 10 2015 224 641 A1 offenbart ein Verfahren zum Erkennen einer Kollision eines Roboterarms mit einem Objekt. Im Rahmen dieses Verfahren kommen mehrere Positionssensoren des Roboters, eine elektronische Steuervorrichtung sowie eine Mehrzahl an Antrieben zum Einsatz.

Eine in der DE 10 2017 217 882 A1 beschriebene Kollisionsschutzvorrichtung für einen Roboter umfasst, prinzipiell vergleichbar mit der in der DE 36 05 505 A1 beschriebenen Vorrichtung, einen zur Anbringung an einem Antriebsteil des Roboters ausgebildeten ersten Hauptkörper und einen zur Kopplung mit einem Endeffektor des Roboters ausgebildeten zweiten Hauptkörper. Hierbei ist der zweite Hauptkörper durch Vorspannmittel bezüglich des ersten Hauptkörpers in eine Grundstellung vorgespannt.

Eine in der DE 21 2020 000 034 U1 beschriebene Antikollisionsschutzvorrichtung für einen Roboter umfasst eine Befestigungsplatte, auf welcher sich Gleitschienen befinden. Auf den Gleitschienen sind Verbindungsstangen geführt, welche mit einer Hohlfederplatte gekoppelt sind. In der Hohlfederplatte befindet sich eine Vielzahl an Stoßdämpfungsfedern.

Eine weitere Stoßschutzvorrichtung für Roboter ist der CN 211 491 630 U beschrieben. Auch diese Vorrichtung umfasst mehrere begrenzt gegeneinander bewegliche Komponenten, welche durch Federn vorgespannt sind.

Die US 2020 / 254 628 A1 beschreibt eine Schraubvorrichtung umfassend einen Schraubendreher und ein Verbindungselement zur Kopplung des Schraubendrehers mit einem Roboterarm. Das Verbindungselement weist ein erstes roboterseitiges Übertragungselement, ein zweites werkzeugseitiges Übertragungselement, ein zwischen dem ersten und zweiten Übertragungselement angeordnetes Rückstellelement und ein Abstandsmesselement auf. Die beiden Übertragungselemente können gegen eine Rückstellkraft des Rückstellelements in einer Betätigungsrichtung aufeinander zu bewegt werden. Das Abstandsmesselement misst einen Abstand, der den Abstand zwischen den Übertragungselementen in der Betätigungsrichtung repräsentiert und zur Steuerung der auf den Schraubendreher wirkenden Betätigungskraft verwendet wird.

Die US 2004 / 128 850 A1 offenbart eine ferngesteuerte zentrale Nachgiebigkeitsvorrichtung, umfassend eine obere und eine untere Struktur, die parallel zueinander angeordnet sind, eine Vielzahl von elastischen Körpern, die die obere und die untere Struktur um eine zentrale Achse der entfernten zentralen Nachgiebigkeit koppeln; und drei oder mehr polartypische Begrenzer gleicher Höhe, die auf einer ersten Struktur einer der oberen und unteren Strukturen um die Mittelachse herum installiert sind, um sich in Richtung einer zweiten Struktur der anderen zu erstrecken. Die Begrenzer sind so angeordnet, dass mindestens ein Begrenzer auf jeder der beiden Seiten in Bezug auf eine gerade Linie existiert, die durch die Mittelachse auf einer Ebene senkrecht zur Mittelachse verläuft, so dass, wenn eine vorbestimmte elastische Verschiebung einer Auf- und Abwärtsrichtung in den elastischen Körpern auftritt, die vorbestimmte elastische Verschiebung der elastischen Körper durch Abstützen einer Kontaktfläche, die an einem Endabschnitt der jeweiligen Begrenzer installiert ist, durch eine an der zweiten Struktur installierte Grundplatte begrenzt wird.

Die CN 101 863 035 B beschreibt eine flexible Taille für einen Roboter, die aus einem beweglichen Teil, einem schwingenden Teil, einem Wegsensor und einem Winkelsensor besteht, wobei der bewegliche Teil die Bewegungsfunktion in einer Richtung realisiert, der schwingende Teil die Schwingfunktion in zwei Richtungen realisiert, und Federn sowohl in dem beweglichen Teil als auch in dem schwingenden Teil angeordnet sind, wobei die Flexibilität und die Rückstellfunktion der Taille in der Bewegungsrichtung und der Schwingrichtung durch die Elastizität der Federn realisiert wird. Der Kontaktzustand von Betriebsobjekten kann durch die Information eines Positionssensors und des Winkelsensors, die an der Taille angeordnet sind, identifiziert werden.

Der Erfindung liegt die Aufgabe zugrunde, eine gegenüber dem genannten Stand der Technik weiterentwickelte Stoßschutz-Sicherheitseinrichtung für Roboter anzugeben, welche sich durch einen besonders fertigungsfreundlichen, kompakten und zugleich robusten Aufbau auszeichnet.

Diese Aufgabe wird erfindungsgemäß gelöst durch eine für die Verwendung bei einem Roboter geeignete Stoßschutz-Sicherheitseinrichtung mit den Merkmalen des Anspruchs 1. Die Stoßschutz-Sicherheitseinrichtung umfasst ein erstes Anschlussteil, welches zur Verbindung mit einem Roboterarm vorgesehen ist, sowie ein zur Verbindung mit einem Aktuator vorgesehenes zweites Anschlussteil, wobei die beiden Anschlussteile mittels Führungen erster und zweiter Art miteinander zusammenwirken und mehrere als Druckfedern ausgebildete Federelemente zwischen die Anschlussteile gespannt sind.

Die verschiedenartigen Führungen umfassen jeweils mehrere mit dem zweiten Anschlussteil verbundene Zapfen, die eine Bewegung des zweiten Anschlussteils lediglich entlang von parallel ausgerichteten Mittelachsen der Zapfen relativ zum ersten Anschlussteil erlauben, wobei die der Führung erster Art zuzurechnenden Zapfen jeweils eine in Auszugsrichtung - die vom ersten Anschlussteil weggerichtet ist - wirksame, das heißt eine das vollständige Entfernen des zweiten Anschlussteil vom ersten Anschlussteil verhindernde Kontur des ersten Anschlussteils hintergreifende Anschlagkontur aufweisen. Im Unterschied zu denjenigen Zapfen, welche Komponenten der Führung erster Art darstellen, sind die der Führung zweiter Art zuzurechnenden Zapfen jeweils von einem der genannten Federelemente umgeben.

Die Stoßschutz-Sicherheitseinrichtung umfasst einen zur Detektion der Relativpositionierung der Anschlussteile vorgesehenen Positionssensor, welcher in eine Aktor-Sensor-Box integriert ist, welche zusätzlich zur Positionssensorik elektrische und/oder fluidtechnische, das heißt pneumatische oder hydraulische, Komponenten umfasst, wobei die Aktor-Sensor-Box an das erste Anschlussteil angebaut oder in dieses eingebaut ist, wobei mittels des Positionssensors detektierbar ist, ob das zweite Anschlussteil, nachdem dieses eine Ausgleichsbewegung aufgrund einer Überlast vollzogen hat, das heißt gegen Federkraft in Richtung zum ersten Anschlussteil verschoben wurde, wieder in seine Ausgangsstellung zurückgekehrt ist

Es liegt somit eine klare Trennung von Funktionen vor, die durch die verschiedenen Führungen übernommen werden, wobei mindestens eine der beiden Führungen, insbesondere genau eine der beiden Führungen, nämlich die Führung erster Art, als Linear-Gleitlager mit Führungswellen als Zapfen ausgebildet sein kann. Als zusätzliche Funktion ist im Fall der ersten Führung eine Anschlagfunktion und im Fall der zweiten Führung die die Anschlussteile voneinander abstoßende Federung gegeben. Die zweite Führung ist nicht notwendigerweise als Linearlagerung ausgebildet. Beispielsweise kann die Funktion der Zapfen der zweiten Führung allein in der Abstützung der Federelemente liegen. Dank der exakten, drehfesten Linearlagerung, welche mit Hilfe der Führungswellen bewerkstelligt ist, genügt bereits eine geringe Federkraft der Federelemente für die gewünschte Funktionalität der Stoßschutz-Sicherheitseinrichtung, wobei nach deren Ansprechen, das heißt nach einer kollisionsbedingten Kompression der Federelemente, eine Rückführung in die Ausgangsposition, das heißt in den maximal entspannten Zustand der Federelemente, allein durch Federkraft, je nach Ausrichtung der Sicherheitseinrichtung zusätzlich durch Gewichtskraft, erfolgt.

In vorteilhafter, besonders schlanker Ausführung der insbesondere für IndustrieRoboter geeigneten Stoßschutz-Sicherheitseinrichtung liegen die Mittelachsen sämtlicher Zapfen in einer gemeinsamen Ebene, was gleichbedeutend damit ist, dass die Zapfen in einer einzigen geraden Reihe angeordnet sind, wobei die der Führung erster Art zuzurechnenden Zapfen zwischen denjenigen Zapfen, die der Führung zweiter Art zuzurechnen sind, angeordnet sind.

Hierbei weist beispielsweise die Führung erster Art ebenso wie die Führung zweiter Art genau zwei Zapfen auf, wobei eine Befestigungskontur am ersten Anschlussteil, welche zum Anschluss an eine Gegenkontur eines Roboterarms vorgesehen ist, zwischen den beiden Zapfen, welche der Führung erster Art zuzurechnen sind, angeordnet ist.

Zur Befestigung des ersten Anschlussteils, welches auch als Grundkörper der Stoßschutz-Sicherheitseinrichtung bezeichnet wird, an einem Roboterarm kann die am ersten Anschlussteil vorhandene Befestigungskontur einen Montageflansch umfassen, welcher vom zweiten Anschlussteil geringer beabstandet ist als die mit der Anschlagkontur der Zapfen zusammenwirkende Kontur des ersten Anschlussteils. Der auf diese Weise gegebene, besonders geringe Abstand zwischen der Befestigungskontur und dem zweiten, beweglichen Anschlussteil sorgt für eine besonders gute Stabilität der gesamten Sicherheitseinrichtung, insbesondere im Fall von Kippbelastungen, welche auf das zweite Anschlussteil über einen an dieses Anschlussteil angebauten Aktuator wirken.

Diejenige Seite des ersten Anschlussteils, an welcher sich der Montageflansch befindet, ist ohne Beschränkung der Allgemeinheit als Oberseite definiert. Im Vergleich zum ersten Anschlussteil weist das zweite Anschlussteil typischerweise eine weniger komplexe, flachere, einem Quader ähnlichere Form auf, wobei eine Oberkante dieses Quaders zu einer Unterkante des ersten Anschlussteils parallel ausgerichtet ist. Die sogenannte Oberkante des zweiten Anschlussteils ist unabhängig von der tatsächlichen Orientierung der Stoßschutz-Sicherheitseinrichtung im Raum als die - abgesehen von den Zapfen - am geringsten vom ersten Anschlussteil beabstandete Kante zweiten Anschlussteils definiert. Das zweite Anschlussteil wird auch als Aktuatorflansch oder Verbindungsteil der Stoßschutz-Sicherheitsreinrichtung bezeichnet.

Gemäß einer möglichen Ausgestaltung sind die der Führung zweiter Art zuzurechnenden Zapfen kürzer als die Federelemente sowie kürzer als die der Führung erster Art zuzurechnenden Zapfen, wobei sie in der maximal vom ersten Anschlussteil abgehobenen Positionierung des zweiten Anschlussteils komplett vom ersten Anschlussteil beabstandet, das heißt aus dem ersten Anschlussteil herausgezogen, sind. Dies hat den Vorteil, dass in der Grundstellung der Stoßschutz-Sicherheitseinrichtung, das heißt bei maximal vom ersten Anschlussteil abgehobenem zweiten Anschlussteil, der vollständig ausgefahrene Zustand der Zapfen der Führung zweiter Art auf einfachste Weise optisch erkennbar ist. Ihre Aufgabe, als Komponenten einer Linearführung zwischen den beiden Anschlussteilen zu wirken, nehmen die der Führung zweiter Art zuzurechnenden Zapfen erst dann wahr, wenn das zweite Anschlussteil bereits teilweise in Richtung zum ersten Anschlussteil gegen die Kraft der Federelemente verschoben ist. Erst bei einer weiteren Verschiebung des zweiten Anschlussteils und damit zunehmenden Federkräften können die Zapfen der Führung zweiter Art zusätzlich zu den Zapfen, welche der Führung erster Art zuzurechnen sind, als Linearführungskomponenten wirken. Auch Ausgestaltungen, in denen die Zapfen, welche der Führung zweiter Art zuzurechnen sind, ausschließlich der Stützung der Federn dienen und darüber hinaus optional eine Anschlagfunktion beim Zusammenschieben der Anschlussteile haben, sind realisierbar.

Ist das zweite Anschlussteil maximal in Richtung zum ersten Anschlussteil verschoben, so kann ein Anschlag dadurch gegeben sein, dass die als Anschlussblöcke bezeichneten Hauptkomponenten der beiden Anschlussteile aneinander anschlagen. Ist der Verschiebeweg des zweiten Anschlussteils dagegen dadurch begrenzt, dass die der Führung zweiter Art zuzurechnenden Zapfen in definierter Weise in Sacklochbohrungen, welche sich im ersten Anschlussteil befinden und Konturen der Führung zweiter Art darstellen, gestoppt werden, so verbleibt auch bei maximal zusammengeschobenen Anschlussteilen ein Abstand zwischen der Unterkante des ersten Anschlussteils und der Oberkante des zweiten Anschlussteils.

Optional umfasst die Stoßschutz-Sicherheitseinrichtung eine das erste Anschlussteil abdeckende, an diesem befestigbare Haube, welche auf ihrer dem zweiten Anschlussteil abgewandten Seite eine geschlossene Deckfläche aufweisen kann. Die geschlossene Ausführung der Deckfläche setzt voraus, dass an der entsprechenden Stelle kein Raum für den Roboterarm freigehalten werden muss und ist insbesondere als Staubschutz wirksam. Die Haube, das heißt der Gehäusedeckel, ist beispielsweise durch eine Schnappverbindung, das heißt durch Aufclipsen, am ersten Anschlussteil werkzeuglos befestigbar.

In besonders fertigungsfreundlicher Weise, insbesondere bei der Herstellung lediglich geringer Stückzahlen, ist es möglich, entweder das erste Anschlussteil oder das zweite Anschlussteil oder beide Anschlussteile und/oder die Haube als 3D-Druckteil herzustellen, das heißt additiv zu fertigen. Grundsätzlich eignen sich für die Herstellung der Anschlussteile im 3D-Druck metallische Werkstoffe ebenso wie nichtmetallische Werkstoffe, wobei die Anschlussteile auch aus einer Kombination metallischer und nichtmetallischer Werkstoffe additiv gefertigt sein können. Im Fall der Herstellung mindestens eines Anschlussteils aus Kunststoff ist dieses beispielsweise aufbauend auf einem endlosfaserverstärkten Kern per 3D-Druck gefertigt. Insbesondere kommen Kohlenstofffasern zur Verstärkung des Anschlussteils in Betracht. Bei Ausbildung beider Anschlussteile aus Kunststoff hat es sich bewährt, wenn die der Führung erster Art zuzurechnenden Zapfen jeweils in mindestens einer Kugelumlaufbuchse geführt sind. Es hat sich weiterhin bewährt, wenn mindestens eines der Anschlussteile aus Aluminium gebildet ist und die der Führung erster Art zuzurechnenden Zapfen jeweils in mindestens einer Kugelumlaufbuchse geführt sind. Besonders bevorzugt ist es, wenn beide Anschlussteile aus Aluminium gebildet sind.

Das Vorsehen von Kugelumlaufbuchsen ermöglich eine besonders exakte Führung der der Führung erster Art zuzurechnenden Zapfen und verhindert zuverlässig eine Verkippung des ersten Anschlussteils gegenüber dem zweiten Anschlussteil.

Um die Relativpositionierung der beiden Anschlussteile zu detektieren, ist ein Positionssensor vorgesehen sein, welcher in eine Aktor-Sensor-Box integriert ist oder mit einer Aktor-Sensor-Box zusammenwirkt. Diese Box, welche zusätzlich zur Positionssensorik elektrische und/oder fluidtechnische, das heißt pneumatische oder hydraulische, Komponenten umfasst, ist an das erste Anschlussteil angebaut oder in dieses eingebaut. Mit Hilfe des Positionssensors ist detektierbar, ob das zweite Anschlussteil, nachdem dieses eine Ausgleichsbewegung aufgrund einer Überlast vollzogen hat, das heißt gegen Federkraft in Richtung zum ersten Anschlussteil verschoben wurde, wieder in seine Ausgangsstellung zurückgekehrt ist. Die Rückkehr in die Ausgangsstellung erfolgt in typischer Ausgestaltung ohne pneumatische Unterstützung.

Unabhängig von der Ausgestaltung oder dem Vorhandensein einer Aktor-Sensor-Box können sich an beiden Anschlussteilen Pneumatik- oder Hydraulikanschlüsse befinden. Insbesondere am ersten Anschlussteil können sich Klemmhalterungen für Leitungen, das heißt elektrische Leitungen und/oder fluidtechnische Schläuche, befinden, wobei diese Klemmhalterungen in fertigungstechnisch besonders vorteilhafter Weise, besonders im Fall der additiven Fertigung des ersten Anschlussteils, einstückig mit den durch das erste Anschlussteil gebildeten Komponenten der Führungen jeglicher Art einschließlich derjenigen Kontur, welche mit den Anschlagkonturen der Zapfen zusammenwirkt, ausgebildet sein können.

Nachfolgend wird ein Ausführungsbeispiel der Erfindung anhand einer Zeichnung näher erläutert. Hierin zeigen:
- Fig. 1: eine Stoßschutz-Sicherheitseinrichtung in vereinfachter geschnittener Darstellung,
- Fig. 2: die Sicherheitseinrichtung in Seitenansicht,
- Fig. 3: die Sicherheitseinrichtung einschließlich einer Haube in perspektivischer Ansicht.

Eine insgesamt mit dem Bezugszeichen 1 gekennzeichnete Stoßschutz-Sicherheitseinrichtung ist zur Verwendung bei einem Industrieroboter vorgesehen. Hinsichtlich der prinzipiellen Funktion der Sicherheitseinrichtung 1 wird auf den eingangs zitierten Stand der Technik verwiesen.

Die Stoßschutz-Sicherheitseinrichtung 1 ist aus zwei Anschlussteilen 2, 3 aufgebaut, nämlich einem auch als Grundkörper bezeichneten ersten Anschlussteil 2, welches mit einem Arm des Roboters zu verbinden ist, sowie einem zweiten Anschlussteil 3, welches mit einem Endeffektor des Roboters zu verbinden ist. Im Ausführungsbeispiel liegt ein Endeffektor in Form eines Aktuators 4 vor, der fest mit dem zweiten Anschlussteil 3 verbunden ist.

Im regulären Betrieb des Roboters ist eine feste geometrische Relation zwischen den Anschlussteilen 2, 3 gegeben. Eine Sicherheitsfunktion der Einrichtung 1 liegt darin, dass das zweite Anschlussteil 3, wenn hohe Stoßkräfte auf dieses Teil 3 einwirken, in Richtung zum ersten Anschlussteil 2 gegen Federkraft verschoben werden kann. Die entsprechende Verschiebrichtung ist mit VR bezeichnet. Da die Verschiebrichtung VR als z-Richtung definiert ist, wird die gesamte Stoßschutz-Sicherheitseinrichtung 1 auch als z-Ausgleichsmodul bezeichnet. Eine Bewegung des zweiten Anschlussteils 3 relativ zum ersten Anschlussteil 2 ist lediglich in Verschieberichtung VR und entgegengesetzt dazu möglich, wobei ein Verkippen des zweiten Anschlussteils 3 gegenüber dem ersten Anschlussteil 2 zuverlässig verhindert ist. Ein Montageflansch 5 des ersten Anschlussteils 2 liegt in einer Ebene, welche - ausgehend von einem kartesischen Koordinatensystem - zur zugehörigen x-y-Ebene parallel ist. Der Montageflansch 5 ist einer insgesamt mit 6 bezeichneten Befestigungskontur des ersten Anschlussteils 2 zuzurechnen. Befestigungsschrauben zum Anschrauben des ersten Anschlussteils 2 am Roboterarm sind mit 7 bezeichnet.

Die lineare, mechanisch vorgespannte Beweglichkeit des zweiten Anschlussteils 3 gegenüber dem ersten Anschlussteil 2 ist bewerkstelligt durch eine Führung 8 erster Art und eine Führung 9 zweiter Art. Hierbei ist die Führung 8 erster Art auf dem gesamten Verschiebeweg des zweiten Anschlussteils 3 wirksam. Der insgesamt mit 10 bezeichneten Führungsvorrichtung, welche die verschiedenartigen Führungen 8, 9 umfasst, sind ferner Federelemente 11 zuzurechnen, bei denen es sich um Druckfedern in Form von Schraubenfedern handelt. Durch die Federelemente 11 sind die beiden Anschlussteile 2, 3 derart gegeneinander vorgespannt, dass sich ein Maximalabstand Dₘₐₓ zwischen den Anschlussteilen 2, 3 einstellen kann. Der Maximalabstand Dₘₐₓ ist zwischen einer Unterkante UK eines Anschlussblocks 12 des ersten Anschlussteils 2 und einer Oberkante OK eines Anschlussblocks 13 des zweiten Anschlussteils 3 zu messen. Der Verschiebeweg, um welchen das zweite Anschlussteil 3 gegenüber dem ersten Anschlussteil 2 verlagerbar ist, entspricht dem Maximalabstand Dₘₐₓ.

Bei beiden Anschlussblöcken 12, 13, welche die Hauptkomponenten der Anschlussteile 2, 3 darstellen, handelt es sich um 3D-Druckteile aus Aluminium.

Das zweite Anschlussteil 3 umfasst zusätzlich zum Anschlussblock 13 jeweils zwei Zapfen 14, 15, welche der Führung 8 ersten Art beziehungsweise der Führung 9 zweiter Art zuzurechnen sind. Schrauben, mit welchen die Zapfen 14 am Anschlussblock 13 befestigt sind, sind mit 16, Zweiflach-Konturen der Zapfen 14 mit 17 bezeichnet.

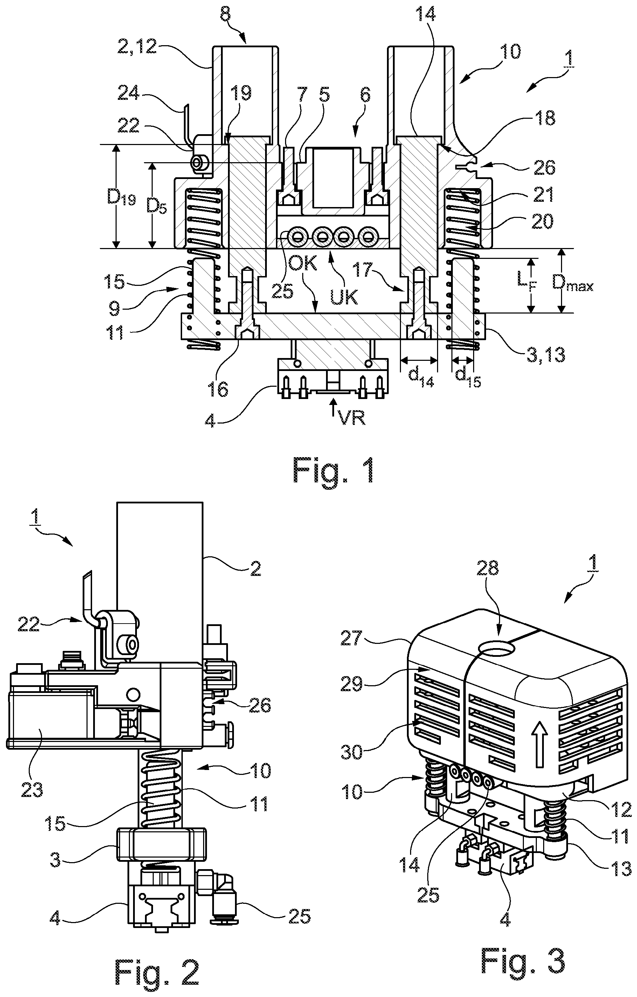

Die beiden Zapfen 14, welche auch als Führungswellen bezeichnet werden, tauchen in jedem Zustand der Sicherheitseinrichtung 1 in das erste Anschlussteil 2 ein und sorgen dafür, dass die beiden Anschlussteile 2, 3 niemals gegeneinander verdreht werden können. Anschlagkonturen 18 am Ende eines jeden Zapfens 14 verhindern das Herausziehen der Zapfen 14 aus dem Anschlussblock 12. Bei den Anschlagkonturen 18 handelt es sich um Hinterschnitte, die mit 19 bezeichnete Konturen des ersten Anschlussteils 2 hintergreifen. Bezogen auf die Anordnung nach Fig. 1 sind die Zapfen 14 somit ausschließlich von oben in den Anschlussblock 12 einsetzbar. Der Durchmesser eines jeden Zapfens 14 ist mit d₁₄ bezeichnet. Vorzugsweise umfasst das erste Anschlussteil 2 im Bereich der Führung für die Zapfen 14 jeweils mindestens eine, hier nicht dargestellte Kugelumlaufbuchse, wodurch sich die Präzision der Führung für die Zapfen 14 erhöhen lässt.

Die beiden Zapfen 14 sind zwischen den Zapfen 15 angeordnet, welche der Führung 9 zweiter Art zuzurechnen sind und jeweils einen Durchmesser d₁₅ aufweisen. Die Mittelachsen sämtlicher Zapfen 14, 15 liegen in einer gemeinsamen, zur y-z-Ebene parallelen Ebene. Eine freie Länge L_{F}, um welche die Zapfen 15 aus dem Anschlussblock 13 herausragen, ist im Ausführungsbeispiel geringer als die maximale Distanz Dₘₐₓ zwischen der Oberkante OK des Anschlussblocks 13 und der Unterkante UK des Anschlussblocks 12.

Jeder Zapfen 15 ist von einem der Federelemente 11 umgeben, wobei dieses zugleich in eine Tasche 20, die durch den Anschlussblock 12 gebildet ist, eingreift und am Taschenboden 21 anschlägt. In dem in den Figuren dargestellten, maximal herausgezogenen Zustand des zweiten Anschlussteils 3 halten die Zapfen 15 die Federelemente 11 in Position. Die Tiefe der Taschen 20 ist etwas größer als die freie Länge L_{F} der Zapfen 15, so dass diese nicht am Taschenboden 21 anschlagen können. Vielmehr liegt bei maximal eingeschobenem Anschlussteil 3 die Oberkante OK des Anschlussblocks 13 an der Unterkante UK des Anschlussblocks 12 an.

Der in z-Richtung, das heißt Vorschubrichtung VR, zu messende Abstand zwischen der Unterkante UK des Anschlussblocks 12 und der Oberseite des Montageflansches 5 ist mit D₅ bezeichnet und geringer als der mit D₁₉ bezeichnete Abstand zwischen der Kontur 19 am Anschlussblock 12, welche den Anschlag der Zapfen 14 - genauer: der Anschlagkonturen 19 - ermöglicht, und der Unterkante UK. Die Bezeichnungen "OK" und "UK" beziehen sich auf die in den Figuren gezeigte Ausrichtung der Sicherheitseinrichtung 1, bei welcher die z-Richtung der vertikalen Richtung entspricht. Durch die Anordnung der Konturen 19 oberhalb des Montageflansches 5 wird zum einen ein langer Führungsweg der Zapfen 14 innerhalb des Anschlussblocks 12 bereitgestellt, wobei zum anderen der Abstand D₅ zwischen dem Montageflansch 5 und der Unterkante UK minimiert ist, um eventuelle Kippmomente, die auf das Anschlussteil 2 wirken, gering zu halten.

Zur Detektion der relativen Positionierung der Anschlussteile 2, 3 ist ein Sensor 22 vorgesehen, welcher am Anschlussblock 12 befestigt ist und mit einer Aktor-Sensor-Box 23 zusammenwirkt, die ebenfalls dem ersten Anschlussteil 2 zuzurechnen ist. Eine an den Sensor 22, das heißt Positionssensor, angeschlossene elektrische Leitung ist mit 24 bezeichnet. Die Stoßschutz-Sicherheitseinrichtung 1 einschließlich des Sensors 22 ist derart ausgebildet, dass sie im laufenden Betrieb in Form eines nicht den vollen Verschiebeweg ausnutzenden Herandrückens des Anschlussteils 3 an das Anschlussteil 2 in Aktion treten kann, was eine teilweise Komprimierung der Federelemente 11 bedeutet, ohne durch dieses "in die Feder fahren" die Funktion des Aktuators 4 zu beeinträchtigen oder den Roboter zu stoppen. In keinem Betriebszustand wird das zweite Anschlussteil 3 gegenüber dem ersten Anschlussteil 2 verdreht oder verkippt.

An beiden Anschlussteilen 2 sind ferner Pneumatikanschlüsse 25 erkennbar. Darüber hinaus befinden sich am ersten Anschlussteil 2 Klemmhalterungen 26, die unmittelbar durch den aus Kunststoff gefertigten Anschlussblock 12 gebildet sind. Die Klemmhalterungen 26 sind zur Halterung nicht dargestellter Pneumatikschläuche oder Kabel nutzbar.

Die Stoßschutz-Sicherheitseinrichtung 1 wird komplettiert durch eine Haube 27, welche mehrteilig ausgeführt und auf das erste Anschlussteil 2 aufgesetzt ist. Eine geschlossene Deckfläche der Haube 27 ist mit 28 bezeichnet. Seitenflächen 29 der Haube 27 weisen im Ausführungsbeispiel Schlitze 30 auf. Die Haube 27 ist werkzeuglos auf das erste Anschlussteil 2 aufsetzbar und von diesem abnehmbar. Die Haube 27 ist bevorzugt aus Kunststoff und in einem 3D-Druckverfahren ausgebildet.

### Bezugszeichenliste

- 1: Stoßschutz-Sicherheitseinrichtung
- 2: erstes Anschlussteil
- 3: zweites Anschlussteil
- 4: Aktuator
- 5: Montageflansch
- 6: Befestigungskontur
- 7: Schraube
- 8: Führung erster Art
- 9: Führung zweiter Art
- 10: Führungsvorrichtung
- 11: Federelement
- 12: erster Anschlussblock
- 13: zweiter Anschlussblock
- 14: Zapfen
- 15: Zapfen
- 16: Schraube
- 17: Zweiflach-Kontur
- 18: Anschlagkontur des Zapfens 14
- 19: Kontur am ersten Anschlussteil, zusammenwirkend mit der Anschlagkontur 18
- 20: Tasche
- 21: Taschenboden
- 22: Positionssensor
- 23: Aktor-Sensor-Box
- 24: Elektrische Leitung
- 25: Pneumatikanschluss
- 26: Klemmhalterung
- 27: Haube
- 28: Deckfläche
- 29: Seitenfläche
- 30: Schlitz

- Dₘₐₓ: Maximalabstand
- D₅: Abstand des Montageflansches 5 von der Unterkante
- d₁₄: Durchmesser eines Zapfens 14
- d₁₅: Durchmesser eines Zapfens 15
- D₁₉: Abstand der Kontur 19 von der Unterkante
- L_{F}: freie Länge
- OK: Oberkante
- UK: Unterkante
- VR: Verschieberichtung

## Patentansprüche

1. Stoßschutz-Sicherheitseinrichtung für Roboter,
- mit einem ersten Anschlussteil (2), welches zur Verbindung mit einem Roboterarm vorgesehen ist, sowie
- mit einem zweiten Anschlussteil (3), welches zur Verbindung mit einem Aktuator (4) vorgesehen ist, wobei
- die Anschlussteile (2, 3) mittels Führungen (8, 9) erster und zweiter Art miteinander zusammenwirken und mehrere als Druckfedern ausgebildete Federelemente (11) zwischen die Anschlussteile (2, 3) gespannt sind, wobei
die verschiedenen Führungen (8, 9) jeweils mehrere mit dem zweiten Anschlussteil (3) verbundene Zapfen (14, 15) umfassen, die eine Bewegung des zweiten Anschlussteils (3) lediglich entlang von parallel ausgerichteten Mittelachsen der Zapfen (14, 15) relativ zum ersten Anschlussteil (2) erlauben, wobei
- die der Führung (8) erster Art zuzurechnenden Zapfen (14) jeweils eine, in einer Auszugsrichtung, die vom ersten Anschlussteil (2) weggerichtet ist, wirksame Kontur (19) des ersten Anschlussteils (2) hintergreifende Anschlagkontur (18) aufweisen, und
- die der Führung (9) zweiter Art zuzurechnenden Zapfen (15) jeweils von einem der Federelemente (11) umgeben sind, und mit
- einem zur Detektion der Relativpositionierung der Anschlussteile (2, 3) vorgesehenen Positionssensor (22), welcher in eine Aktor-Sensor-Box (23) integriert ist oder mit einer Aktor-Sensor-Box (23) zusammenwirkt, welche zusätzlich zur Positionssensorik elektrische und/oder fluidtechnische, das heißt pneumatische oder hydraulische, Komponenten umfasst, wobei die Aktor-Sensor-Box (23) an das erste Anschlussteil (2) angebaut oder in dieses eingebaut ist, wobei mittels des Positionssensors (22) detektierbar ist, ob das zweite Anschlussteil (3), nachdem dieses eine Ausgleichsbewegung aufgrund einer Überlast vollzogen hat, das heißt gegen Federkraft in Richtung zum ersten Anschlussteil (2) verschoben wurde, wieder in seine Ausgangsstellung zurückgekehrt ist.

2. Sicherheitseinrichtung nach Anspruch 1, wobei die Mittelachsen sämtlicher Zapfen (14, 15) in einer gemeinsamen Ebene liegen, wobei die der Führung (8) erster Art zuzurechnenden Zapfen (14) zwischen denjenigen Zapfen (15), die der Führung (9) zweiter Art zuzurechnen sind, angeordnet sind.

3. Sicherheitseinrichtung nach Anspruch 2, wobei die Führung (8) erster Art ebenso wie die Führung (9) zweiter Art genau zwei Zapfen (14, 15) aufweist, wobei eine Befestigungskontur (6) am ersten Anschlussteil (2), welche zum Anschluss an eine Gegenkontur eines Roboterarms vorgesehen ist, zwischen den beiden Zapfen (14), welche der Führung (8) erster Art zuzurechnen sind, angeordnet ist.

4. Sicherheitseinrichtung nach Anspruch 3, wobei die am ersten Anschlussteil (2) vorhandene Befestigungskontur (6) einen Montageflansch (5) umfasst, welcher vom zweiten Anschlussteil (3) geringer beabstandet ist als die mit der Anschlagkontur (18) der Zapfen (14) zusammenwirkende Kontur (19) des ersten Anschlussteils (2).

5. Sicherheitseinrichtung nach einem der Ansprüche 1 bis 4, wobei die der Führung (9) zweiter Art zuzurechnenden Zapfen (15) kürzer als die Federelemente (11) sowie kürzer als die der Führung (8) erster Art zuzurechnenden Zapfen (14) sind und in der maximal vom ersten Anschlussteil (2) abgehobenen Positionierung des zweiten Anschlussteils (3) komplett vom ersten Anschlussteil (2) beabstandet sind.

6. Sicherheitseinrichtung nach einem der Ansprüche 1 bis 5, wobei eine das erste Anschlussteil (2) abdeckende, an diesem gehaltene Haube (27), welche auf ihrer dem zweiten Anschlussteil (3) abgewandten Seite eine geschlossene Deckfläche (28) aufweist.

7. Sicherheitseinrichtung nach einem der Ansprüche 1 bis 6, wobei mindestens eines der Anschlussteile (2, 3) und/oder die Haube (27) als 3D-Druckteil ausgebildet ist/sind.

8. Sicherheitseinrichtung nach Anspruch 7, wobei das als 3D-Druckteil ausgebildete Anschlussteil (2, 3) und/oder die Haube (27) aus Kunststoff mit endlosfaserverstärktem Kern gefertigt ist/sind.

9. Sicherheitseinrichtung nach einem der Ansprüche 1 bis 8, wobei mindestens eines der Anschlussteile (2, 3) aus Aluminium gebildet ist und die der Führung (8) erster Art zuzurechnenden Zapfen (14) jeweils in mindestens einer Kugelumlaufbuchse geführt sind.

10. Sicherheitseinrichtung nach Anspruch 9, wobei beide Anschlussteile (2, 3) aus Aluminium gebildet sind.

11. Sicherheitseinrichtung nach einem der Ansprüche 1 bis 10, **gekennzeichnet durch** Pneumatikanschlüsse (25) an beiden Anschlussteilen (2, 3) und mehrere Klemmhalterungen (26) für Pneumatikschläuche am ersten Anschlussteil (2), wobei die Klemmhalterungen (26) einstückig mit den durch das erste Anschlussteil (2) gebildeten Komponenten der Führungen (8, 9) jeglicher Art einschließlich derjenigen Kontur (19), welche mit den Anschlagkonturen (18) der Zapfen (14) zusammenwirkt, ausgebildet sind.

## Claims

1. An impact protection safety device for robots,
- having a first connection part (2), which is provided for connection to a robot arm, and
- a second connection part (3), which is provided for connection to an actuator (4), wherein
- the connection parts (2, 3) interact with one another by means of guides (8, 9) of a first type and a second type and multiple spring elements (11) designed as compression springs are spanned between the connection parts (2, 3), wherein
the various guides (8, 9) each comprising multiple pins (14, 15) which are connected to the second connection part (3) and which allow movement of the second connection part (3) only along parallel-oriented central axes of the pins (14, 15) relative to the first connection part (2), wherein
- the pins (14) belonging to the guide (8) of the first type each having a stop contour (18) which engages behind a contour (19) of the first connection part (2), which contour is effective in a direction of extension that is directed away from the first connection part (2), and
- the pins (15) belonging to the guide (9) of the second type are each surrounded by one of the spring elements (11), and having
- a position sensor (22) which is provided for detecting the relative position of the connection parts (2, 3) and which is integrated into an actuator-sensor box (23) or interacts with an actuator-sensor box (23) which, in addition to the position sensor system, comprises electrical and/or flow, i.e. pneumatic or hydraulic, components, the actuator-sensor box (23) being attached to or installed in the first connection part (2), and the position sensor (22) being used to detect whether the second connection part (3), after it has undergone a compensating movement due to an overload, i.e. has been displaced against spring force in the direction of the first connection part (2), has returned to its initial position.

2. The safety device according to claim 1, wherein the central axes of all the pins (14, 15) lie in a common plane, wherein the pins (14) belonging to the guide (8) of the first type are arranged between those pins (15) belonging to the guide (9) of the second type.

3. The safety device according to claim 2, wherein the guide (8) of the first type as well as the guide (9) of the second type has exactly two pins (14, 15), wherein a fastening contour (6) on the first connection part (2), which fastening contour is provided for connection to a counter contour of a robot arm, is arranged between the two pins (14) belonging to the guide (8) of the first type.

4. The safety device according to claim 3, wherein the fastening contour (6) present on the first connection part (2) comprises a mounting flange (5) which is spaced less far from the second connection part (3) than the contour (19) of the first connection part (2) which interacts with the stop contour (18) of the pins (14).

5. The safety device according to any one of claims 1 to 4, wherein the pins (15) belonging to the guide (9) of the second type are shorter than the spring elements (11) and shorter than the pins (14) belonging to the guide (8) of the first type and are completely spaced apart from the first connection part (2) in the position of the second connection part (3) maximally raised from the first connection part (2).

6. The safety device according to any one of claims 1 to 5, wherein a cover (27) covering the first connection part (2) and held on it has a closed cover surface (28) on its face facing away from the second connection part (3).

7. The safety device according to any one of claims 1 to 6, wherein at least one of the connection parts (2, 3) and/or the cover (27) is/are designed as a 3D printed part.

8. The safety device according to claim 7, wherein the connection part (2, 3) designed as a 3D printed part and/or the cover (27) is/are made of plastic having a continuous fibre-reinforced core.

9. The safety device according to any one of claims 1 to 8, wherein at least one of the connection parts (2, 3) is made of aluminium and the pins (14) belonging to the guide (8) of the first type are each guided in at least one linear ball bearing.

10. The safety device according to claim 9, wherein the two connection parts (2, 3) are made of aluminium.

11. The safety device according to any one of claims 1 to 10, **characterized by** pneumatic connections (25) on the two connection parts (2, 3) and multiple clamping holders (26) for pneumatic hoses on the first connection part (2), wherein the clamping holders (26) are formed integrally with the components, formed by the first connection part (2), of the guides (8, 9) of either type, including the contour (19) which interacts with the stop contours (18) of the pins (14).

## Revendications

1. Dispositif de sécurité antichoc pour robot,
- comportant une première pièce de raccordement (2), laquelle est conçue pour être reliée à un bras de robot, ainsi que
- comportant une seconde pièce de raccordement (3), laquelle est conçu pour être reliée à un actionneur (4), dans lequel
- les pièces de raccordement (2, 3) coopèrent l'une avec l'autre au moyen de guidages (8, 9) de premier et de second types, et plusieurs éléments ressorts (11) réalisés sous la forme des ressorts de pression sont tendus entre les pièces de raccordement (2, 3), dans lequel
les différents guidages (8, 9) comprennent respectivement plusieurs broches (14, 15) reliées à la seconde pièce de raccordement (3), lesquelles permettent un déplacement de la seconde pièce de raccordement (3) uniquement le long des axes médians alignés parallèles des broches (14, 15) par rapport à la première pièce de raccordement (2), dans lequel
- les broches (14) attribuables au guidage (8) du premier type présentent respectivement un contour de butée (18) venant en prise derrière le contour (19) de la première pièce de raccordement (2) fonctionnant dans une direction d'extension, laquelle est dirigée à l'opposé de la première pièce de raccordement (2), et
- les broches (15) attribuables au guidage (9) du second type sont respectivement entourées par un des éléments ressorts (11), et comportant
- un capteur de position (22) conçu pour détecter le positionnement relatif des pièces de raccordement (2, 3), lequel est intégré à un boîtier actionneur-capteur (23) ou lequel coopère avec un boîtier actionneur-capteur (23), lequel comprend, en plus du système de capteur de position, des composants électriques et/ou de technique de fluides, c'est-à-dire pneumatiques ou hydrauliques, dans lequel le boîtier actionneur-capteur (23) est monté sur ou installé dans la première pièce de raccordement (2), dans lequel, il est possible, au moyen du capteur de position (22), de détecter si la seconde pièce de raccordement (3), après avoir effectué un mouvement de compensation dû à une surcharge, c'est-à-dire après avoir été déplacée contre la force du ressort dans la direction de la première pièce de raccordement (2), est revenue à sa position initiale.

2. Dispositif de sécurité selon la revendication 1, dans lequel les axes médians de toutes les broches (14, 15) se trouvent dans un plan commun, dans lequel les broches (14) attribuables au guidage (8) du premier type sont agencées entre les broches (15), qui sont attribuables au guidage (9) du second type.

3. Dispositif de sécurité selon la revendication 2, dans lequel le guidage (8) du premier type ainsi que le guidage (9) du second type présentent exactement deux broches (14, 15), dans lequel un contour de fixation (6) sur la première pièce de raccordement (2), lequel est conçu pour être raccordé à un contre-contour d'un bras de robot, est agencé entre les deux broches (14), lesquelles sont attribuables au guidage (8) du premier type.

4. Dispositif de sécurité selon la revendication 3, dans lequel le contour de fixation (6) disponible sur la première pièce de raccordement (2), comprend une bride de montage (5), laquelle est moins espacée de la seconde pièce de raccordement (3) que le contour (19) de la première pièce de raccordement (2) coopérant avec le contour de butée (18) des broches (14).

5. Dispositif de sécurité selon l'une quelconque des revendications 1 à 4, dans lequel les broches (15) attribuables au guidage (9) du second type sont plus courtes que les éléments ressorts (11) ainsi que plus courtes que les broches (14) attribuables au guidage (8) du premier type et sont complètement espacées de la première pièce de raccordement (2) dans la position de la seconde pièce de raccordement (3) la plus éloignée possible par rapport à la première pièce de raccordement (2).

6. Dispositif de sécurité selon l'une quelconque des revendications 1 à 5, dans lequel un capot (27) recouvrant la première pièce de raccordement (2) et maintenu sur celle-ci, lequel présente, sur sa face opposée à la seconde pièce de raccordement (3), une surface de couverture (28) fermée.

7. Dispositif de sécurité selon l'une quelconque des revendications 1 à 6, dans lequel l'au moins une des pièces de raccordement (2, 3) et/ou le capot (27) sont réalisés sous la forme d'une pièce imprimée en 3D.

8. Dispositif de sécurité selon la revendication 7, dans lequel la pièce de raccordement (2, 3) et/ou le capot (27) réalisés sous la forme d'une pièce imprimée en 3D sont fabriqués en matière plastique avec un noyau renforcé par des fibres continues.

9. Dispositif de sécurité selon l'une quelconque des revendications 1 à 8, dans lequel l'au moins une des pièces de raccordement (2, 3) est formée en aluminium et les broches (14) attribuables au guidage (8) du premier type sont respectivement guidées dans au moins une douille à billes circulantes.

10. Dispositif de sécurité selon la revendication 9, dans lequel les deux pièces de raccordement (2, 3) sont formées en aluminium.

11. Dispositif de sécurité selon l'une quelconque des revendications 1 à 10, **caractérisé par** des raccords pneumatiques (25) sur les deux pièces de raccordement (2, 3) et plusieurs supports de serrage (26) pour des tuyaux pneumatiques sur la première pièce de raccordement (2), dans lequel les supports de serrage (26) sont réalisés monobloc avec les composants des guidages (8, 9) de tout type formés par la première pièce de raccordement (2), y compris le contour (19), qui coopère avec les contours de butée (18) des broches (14).
